# EUROPEAN PATENT APPLICATION

(11) **EP 2 184 383 A1**
(43) Date of publication of application: **12.05.2010**
(21) Application number: 09174546.3
(22) Date of filing: 29.10.2009
(51) Int. Cl.: C25B 9/06, F02M 25/12

(54) **Hydrogen-oxygen mixed gas generator**

(30) Priority: 07.11.2008 KR 20080110360
(71) Applicant: Hwang, Boo-Sung, Kyung-ki do (KR)
(72) Inventor: Hwang, Boo-Sung, Kyung-ki do (KR)
(74) Representative: Lang, Christian

(57) **Abstract**

The Hydrogen-oxygen mixed gas generator comprises a tube (10) having a certain inner diameter; an insulation tube (20) which is inserted into an inner surface of the tube (10); an electrolyte plate unit (30) composed of multiple electrolyte plates (31) with multiple holes and loops (32) with certain thickness; at the front of the tube (10) a frontal cover (40) which contains a frontal inlet (41) formed at the bottom and a frontal outlet (42) formed at the top; a frontal insulator (45) which disconnects electricity between the frontal cover (40) and the tube (10); at the rear of the tube (10), a rear cover (50) which contains a rear inlet (51) at the bottom and a rear outlet (52) at the top; a rear insulator disconnecting electricity between the rear cover (50) and the tube (10); between the front and rear cover(40)(50), the tube(10) is inserted in the heat-protective plate(60) covered with multiple heat-protective pins.

## Description

### Technical Field

The present invention relates to a hydrogen-oxygen generator that produces hydrogen-oxygen mixture effectively from water.

### Background

A hydrogen-oxygen mixture mixed gas generator is to produce hydrogen and oxygen from electrolyzed water. Direct electric current is transferred to water containing small amount of electrolytes placed in electrolytic cell with positive and negative electrodes producing hydrogen-oxygen mixed gas for a pollution-free energy source. The mixed gas produced has a molecular ratio of hydrogen and oxygen of 2:1, and hydrogen is generated on the surface of (-) electrode in a bubble form and oxygen on the surface of (+) electrode. Hydrogen and oxygen produced can be mixed and ignited. Also, the ignition of the gas mixture does not produce any pollutant, raising itself as the new eco-friendly energy source.

However, because the amount of hydrogen-oxygen produced is relatively small compared to the amount of electric current transferred to (-) and (+) electrodes, additional gas, such as propane gas, is added and combusted which would result in low economical efficiency.

### Content of the Invention

### Problem to solve

The invention is created to solve the above mentioned problem to provide economical hydrogen-oxygen mixed gas generator by expanding the produced amount of hydrogen-oxygen mixture compared to the amount of electricity provided.

### The means to solve

The hydrogen-oxygen generator produced to solve the above problem contains a caliber, a metallic thin walled tube , an insulation tube inside the thin walled tube , an electrolyte plate unit composed of multiple electrolyte plates with multiple holes and loops with certain thickness placed in the insulation tube in an alternative order; at the lower front for the thin walled tube , a frontal cover which contains frontal inlet is formed and at upper front, a frontal outlet is formed; a frontal insulator which disconnects electricity between the frontal cover and the thin walled tube ; a rear cover containing rear inlet at the lower rear of the thin walled tube and rear outlet at the upper rear of the thin walled tube; a rear insulator to disconnect the electricity between the rear cover and the thin walled tube ; a heat-protective plate covered in multiple heat-protective pins.

### The Effect

According to the developed hydrogen-oxygen mixed gas generator, the thin walled tube with the insulator, the multiple electrolyte plates with multiple holes in the insulator, the front and rear covers at the front and rear of the thin walled tube, and the heat-protective plate in the insulator can increase the amount of hydrogen-oxygen mixed gas produced relative to the amount of electricity provided. Therefore, the gas can be combusted without adding any additional gas, such as propane gas, increasing the economical efficiency.

Also, hydrogen and oxygen are formed in bubble forms, making them easy to remove from the electrodes. As a result, the surface area of the electrodes is enlarged, amplifying the electrolysis efficiency.

### Simple explanations of diagrams

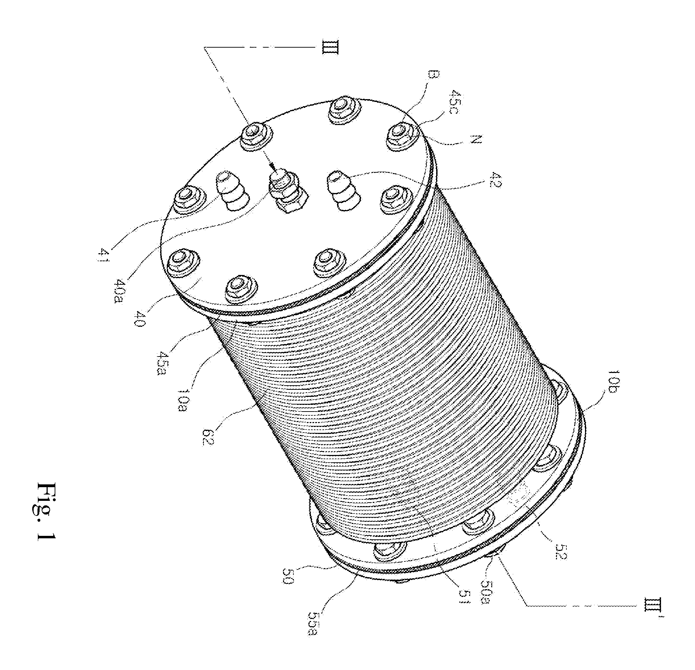

Figure 1 is the whole sketch of the hydrogen-oxygen mixed gas generator.

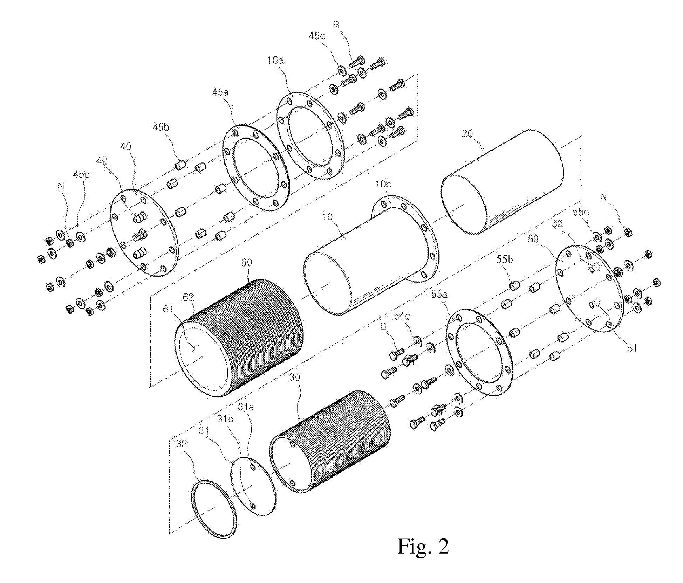

Figure 2 is the more detailed and disassembly of diagram 1

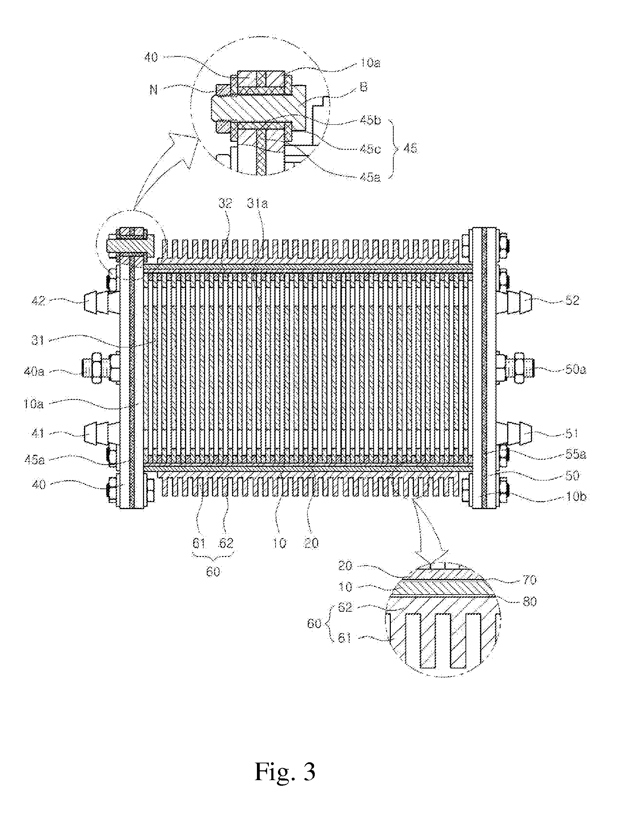

Figure 3 is the sectional view along the diagram 1's III-III

### The specific content for the practice of the invention

The following explanations are based on the diagrams attached.

Diagram 1 is the whole picture of the hydrogen-oxygen generator, the diagram 2 is the disjointed picture of the generator, and the diagram 3 is the sectional view along the diagram 1's III-III.

As pictured, the invention contains a caliber, a metal thin walled tube 10, an insulation tube 20 inside the thin walled tube 10, an electrolyte plate unit 30 composed of multiple electrolyte plates 31 with multiple holes and loops with certain thickness 32 placed in the insulation tube 20 in alternative order; at the lower front for the thin walled tube 10, a frontal cover 40 which contains frontal inlet 41 is formed and at upper front, a frontal outlet 42 is formed; a frontal insulator 45 which disconnects electricity between the frontal cover 40 and the thin walled tube 10; a rear cover 50 containing a rear inlet 51 at the lower rear of the thin walled tube 10 and a rear outlet 52 at the upper rear of the thin walled tube; a rear insulator 55 to disconnect the electricity between the rear cover 50 and the thin walled tube 10; a heat-protective plate 60 covered in multiple heat-protective pins 62. The first thermal conduction plate 70 is formed between the thin walled tube 10 and the insulator 20 to transfer the heat produced by electrolysis effectively to the thin walled tube 10 through the insulator 20. The second thermal conduction plate 80 is also formed between the heat-protective plate 60 and the thin walled tube 10 to deliver the heat from the thin walled tube 10 to the heat-protective plate 60.

The thin walled tube 10 can be in any shape, circular, rectangular, hexagonal and so on, and can be formed by metals such as stainless or a steel-alloy. In the invention explained above, the thin walled tube 10 is in a circular shape and has frontal and rear flanges 10a, 10b on both sides. This tube 10 would be the body of the product.

The insulator 20, adhered inside the thin walled tube 10, insulates the insulator 20 and the electrolyte plate 30. The insulator is favorably composed of materials unaltered by water, such as Teflon rubber, acetal, PP or PE substances.

In the product, the electrolyte plate 31 on the electrolyte unit30 has separately formed upper holes 31a and lower holes 31b on the upper and lower side of the electrolyte plate.

Also the loops 32 has same diameter as the electrolyte unit and the multiple electrolyte units are separated. In our example, the diameter for both components is 3mm.

The above mentioned upper holes 31a and lower holes 31b are reciprocally placed to each other and each form a cylinder on the electrolyte plates.

The electrolyte plate 31 should be made of a material that can effectively perform electrolysis. An example would be a carbon nanotube steel-alloy. Carbon nanotube steel-alloy is made from powered carbon nanotube mixed with nickel and tourmaline in powder form, and is compressed in electrolyte plate form before firing processes. At this phase of the process, decarboxylase sodium compound can be added and the firing process is processed at about 1300°C.

The electrolyte plate 31 can be formed by stainless steel and goes through nano-polishing to help electrolysis and separate produced hydrogen-oxygen bubbles. The electrolyte plate 31 is made of stainless steel or alloy steels.

Nano-polishing means polishing the surface of electrolyte plate 31 by nano-units. Through nano-polishing, the friction on the electrolyte plate 31 surface can be minimized, making hydrogen and oxygen bubbles to be easily separated. Especially when the substances decrease from bulk status to nano-unit, technical, thermal, electrical, magnetic, and optical properties are altered, making electrolysis on water easier.

Tourmaline catalyst can be attached on the surface of the electrolyte plate 31. Tourmaline catalyst is made when tourmaline is powdered in to micro to nano- units, fired at about 1300°C and glued on the electrolyte plate 31. Tourmaline is a mineral under hexagonal system that has the same structure as crystal. It produces a massive amount of anion and electricity through friction, and catalyzes the electrolysis resulting in a greater amount in hydrogen and oxygen. The tourmaline is materialized as a catalyst the can expand its area to contact with water, and this tourmaline catalyst can catalyze the water's electrolysis by attaching it to the electrolyte plate 31.

The frontal cover 40 is jointed with frontal flange 10a by the frontal insulator 45, bolts B, and nuts N placed on the thin walled tube 10. Water flows inward through the frontal inlet 41 at the lower part of the frontal cover 40 and hydrogen-oxygen mixed gas goes out through the frontal outlet 42 on the upper part of the frontal cover 40. Also, the terminal 40a is formed on the frontal cover 40 to connect wires to turn the generator on and off.

The rear cover 50 is jointed with the rear flange 10b by the rear insulator 55a, bolts B, and nuts N placed on the thin walled tube 10. Water flows inward through the rear inlet 51 at the lower part of the rear cover 50 and hydrogen-oxygen mixed gas goes out through the rear outlet 52 on the upper part of the rear cover 50. Also, the terminal 50a is formed on the rear cover 50 to connect wires to turn the generator on and off.

The frontal and rear covers 40, 50 seal the both sides of the thin walled tube 10 and play a negative and a positive pole. To accomplish these roles, each of frontal and rear covers 40, 50 should be insulated from the metal thin walled tube 10, so that the frontal and the rear insulators insulate the covers 40, 50, from the tube 10.

The frontal insulator 45, as drawn in diagram 2 and 3, includes frontal insulating gaskets 45a between the frontal cover 40 and the frontal flange 10a, the multiple frontal insulating tubes 45b in the tubes formed on the frontal cover 40 and at frontal flange 10a, and the frontal insulating loop 45c is adhered to the frontal cover 40 and to the frontal flange 10a by bolts B and nuts N.

The rear insulator 55, as drawn in diagram 2 and 3, includes rear insulating gaskets 55a between the rear cover 50 and the rear flange 10b, the multiple rear insulating tubes 55b in the tubes formed on the rear cover 50 and at rear flange 10b, and the rear insulating loop 55c is adhered to the rear cover (50 and to the rear flange (10b by bolts B and nuts N.

The heat-protective plate 60 is composed of the heat-protective tube 61 on the thin walled tube 10 between the frontal and rear cover 40, 50 and the multiple heat-protective pins 62 are placed on the heat-protective tube 61 separately. The heat-protective tube 61 and heat-protective pins 62 are made from whole aluminum tube or stainless tube processed by machines such as NC, casting, or by forming heat-resistant plastic or ceramic. However, in forming the heat-protective plate 60, the heat-protective tube 61 and heat-protective pins 62 can be made separately and combined later. Further, to increase the heat resistant, carbon nano-tube and tourmaline catalyst can be applied alone or together on the surface of heat-protective pins 62.

The first thermal conduction plate 70 helps the heat produced through electrolysis that it can be delivered to the thin walled tube 10 through the insulator 20. The second thermal conduction plate 80 helps the transferred heat to the thin walled tube 10 that it can be conducted to the heat-protective plate 60. To go through these steps, first and second thermal conduction plate are materialized by carbon nano-tube and tourmaline catalyst in nanometer size, preferably 10-60 nanometer, applied alone or together.

According to the structure, if more than 200V of electric current is injected to the terminals 40a, 50a of frontal and rear cover 40, 50 while the water flows inward through the frontal inlet 41 and the rear inlet 51, then the + and - electric charges on separated electrolytic plates 31 come together and the magnetic field occurs on the electrolytic plate 31. The electrolyzing space at the time is magnetic, so the size of the electrolyzing space will enlarge relative to the number of the electrolyte plate 31, which would electrolyze effectively, producing more hydrogen and oxygen. The hydrogen and oxygen produced is mixed and exhausted through upper holes 31b and front and rear outlets 42, 52.

The invention is explained through the example on diagrams, however, is just an example, and anyone with appropriate knowledge in the field would understand that there can be many variations which might be applied.

### The important symbols on the diagrams

10 - Thin walled tube
10a - frontal flange
10b - rear flange
20 - Insulator
30 - Electrolyte unit
31- Electrolyte plate
32 - Separated loops
40 - Frontal cover
41 - Frontal inlet
42 - Frontal outlet
45 - Frontal insulator
45a - frontal insulating gasket
45b - frontal insulating tube
45c - frontal insulting ring
50 - Rear cover
51 - Rear inlet
52 - Rear outlet
55 - Rear insulator
55a - rear insulating gasket
55b - rear insulating tube
55c - rear insulting ring
60 - heat-protective plate
61 - heat-protective tube
62 - heat-protective pin
70 - first thermal conduction plate
80 - second thermal conduction plate

## Claims

1. A Hydrogen-oxygen mixed gas generator comprising:
a metallic thin walled tube (10) having a certain inner diameter;
an insulation tube (20) which is inserted into an inner surface of the tube (10);
a electrolyte plate unit (30) composed of multiple electrolyte plates (31) with multiple holes and loops (32) with certain thickness;
a frontal cover (40) at the front of the tube (10) containing the frontal inlet (41) formed at the bottom and the frontal outlet (42) formed at the top;
a frontal insulator (45) which disconnects electricity between the frontal cover (40) and the tube (10);
the rear cover (50) at the rear of the tube (10), containing the rear inlet (51) at the bottom and the rear outlet (52) at the top;
a rear insulator disconnecting electricity between the rear cover (50) and the tube (10);
the tube (10) is inserted in a heat-protective plate (60) between the front and rear cover (40, 50) covered with multiple heat-protective pins.

2. The Hydrogen-oxygen mixed gas generator in accordance to claim 1, comprising:
a first thermal conduction plate (70) formed between the tube (10) and the insulator (20); and
a second thermal conduction plate (80) formed between the tube (10) and the heat-protective plate (60).

3. The Hydrogen-oxygen mixed gas generator in accordance to claim 2, wherein
the first and/or second thermal conduction plate (70) (80) can be used by applying nanometer sized carbon nano-tube and tourmaline catalyst.

4. The Hydrogen-oxygen mixed gas generator in accordance to claim 1, wherein
the Hydrogen-oxygen mixed gas generator composes of
the frontal insulator (45) including frontal insulating gaskets (45a) between the frontal cover (40) and the frontal flange (10a), a multiple frontal insulating tubes (45b) in the tubes are formed on the frontal cover (40) and at the frontal flange (10a), and in front of the frontal cover (40) and in the rear of the frontal flange (10a), the frontal insulating loop (45c) is adhered to the frontal cover (40) and to the frontal flange (10a) by bolts (B) and nuts (N); and
the rear insulator (55) including rear insulating gaskets (55a) between the rear cover (50) and the rear flange (10b), a multiple rear insulating tubes (55b) in the tubes are formed on the rear cover (50) and at the rear flange (10b), and the rear insulating loop (55c) is adhered to the rear cover (50) and to rear flange (10b) by bolts (B) and nuts (N).

5. The Hydrogen-oxygen mixed gas generator in accordance to claim 1, wherein
the heat-protective plate (60) is composed of the heat-protective tube (61) on the tube (10) between the frontal and rear cover (40) (50) and the multiple heat-protective pins (62) are separately placed on the heat-protective tube (61).

6. The Hydrogen-oxygen mixed gas generator in accordance to claim 5, wherein
the Hydrogen-oxygen mixed gas generator applies nano-meter sized carbon nano-tube and/or tourmaline catalyst on the surface of the heat-protective pins (62).

7. The Hydrogen-oxygen mixed gas generator in accordance to claim 1, wherein
the electrolyte plate (31) is made of carbon nanotube steel-alloy.

8. The Hydrogen-oxygen mixed gas generator in accordance to claim 1, wherein
the surface of the electrolyte plate (31) is nano-polished to help electrolysis and separate produced hydrogen-oxygen bubbles.

9. The Hydrogen-oxygen mixed gas generator in accordance to claim 1, wherein
tourmaline catalyst is attached on the surface of the electrolyte plate (31).
